# FASCICULE DE BREVET EUROPEEN

(11) **EP 3 050 003 B1**
(45) Date de publication et mention de la délivrance du brevet: **29.08.2018**
(21) Numéro de dépôt: 14771298.8
(22) Date de dépôt: 19.09.2014
(51) Int. Cl.: G06K 19/077

(54) **CARTE A PUCE A AFFICHEUR ET SON PROCEDE DE FABRICATION**
CHIPKARTE MIT ANZEIGE, UND IHR HERSTELLUNGSVERFAHREN
SMART CARD WITH DISPLAY AND METHOD FOR MANUFACTURING SAME

(30) Priorité: 27.09.2013 EP 13306339
(43) Date de publication de la demande: 03.08.2016
(73) Titulaire: Gemalto SA, 92190 Meudon (FR)
(72) Inventeur: KARAFOTIS, Stéphane, F-13881 Gemenos Cedex (FR); KODJAGUEUZIAN, Gilles, F-13881 Gemenos Cedex (FR); DAUPHIN, François, F-13881 Gemenos Cedex (FR)
(86) Numéro de dépôt international: PCT/EP2014/069964
(87) Numéro de publication internationale: WO 2015/044041

(56) Documents cités:
- WO-A1-2008/113677
- DE-A1-102009 009 263
- DE-A1-102011 050 794

## Description

L'invention concerne le domaine technique des cartes à puce à afficheur.

Les cartes à afficheur sont notamment utilisées dans le secteur bancaire. Elles permettent non seulement d'afficher les transactions passées, mais aussi de générer et afficher un mot de passe à usage unique pour les transactions par ordinateur par exemple. Ces cartes disposent d'un substrat flexible supportant un circuit imprimé sur lequel sont électriquement connectés des composants électroniques et notamment un microcontrôleur, un écran, une batterie et un ou plusieurs boutons poussoirs pour communiquer avec le porteur de carte. Plus particulièrement, le microcontrôleur du circuit imprimé permet de lire des informations contenues dans la puce, et notamment les dernières transactions ayant eu lieu, et de les afficher sur l'écran.

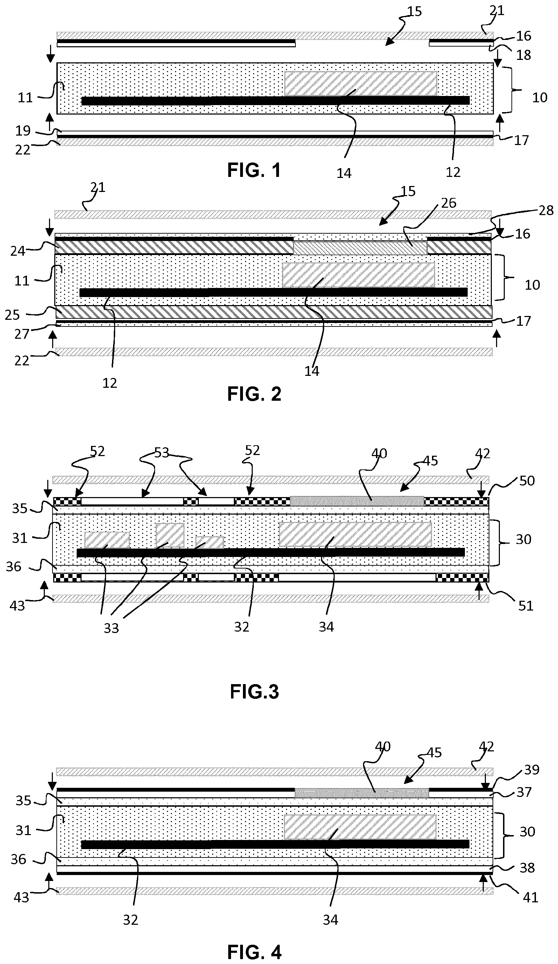

Un procédé connu de fabrication de telles cartes, tel qu'illustré sur la Figure 1, consiste à enrober le substrat flexible 12 supportant le circuit imprimé et les composants électroniques, dans une résine 11 transparente, solidifiée à température ambiante, pour former un coeur transparent 10, puis à laminer, sur chaque face de ce coeur transparent 10, un film transparent de protection 21, 22. Préalablement à son laminage, la surface du film transparent 21, 22, destinée à recouvrir une face du coeur transparent 10, à l'exception d'une zone 15 située en regard de l'écran 14, est imprimée d'une première couche 16, 17 d'encre formant un motif de personnalisation graphique de la carte puis d'une deuxième couche d'encre opaque 18, 19. Le fait de réaliser une couche opaque entre le coeur transparent et le motif de personnalisation graphique permet d'éviter d'une part, l'obtention d'un effet translucide de la personnalisation graphique du fait de la présence du coeur transparent et d'autre part, l'apparition de zones plus sombres dans la personnalisation graphique, dues à des variations de la lumière réfléchie par le coeur transparent du fait de la présence des composants électroniques. Ces impressions sont réalisées par technique offset ou par sérigraphie. Or, pour obtenir une opacité suffisante de la couche d'encre opaque, il faut déposer plusieurs couches successivement, ce qui implique un temps de séchage rallongé, et génère des problèmes de stockage pendant les périodes de séchage. De plus, un séchage long risque de détériorer le film transparent de protection 21, 22 supportant les impressions. Un tel procédé est donc long et coûteux. D'autre part, l'encre utilisée pour réaliser la personnalisation graphique adhérant mal sur le film transparent, un film adhésif est en général appliqué sur l'encre car cet adhésif pénètre à travers l'encre pendant le laminage et permet ainsi une bonne adhérence du film transparent sur le coeur. Cependant, les couches opaques successives 18,19, nécessaires à l'obtention d'une opacité suffisante, rajoutent une épaisseur qui empêche à l'adhésif de pénétrer correctement les différentes couches d'encre si bien que des problèmes d'adhérence du film 21, 22 sur le coeur 10 apparaissent également.

L'impression graphique d'une couche opaque ne permettant pas d'obtenir d'une part, une carte de bonne qualité visuelle, du fait de l'apparition de défauts sur le film transparent de protection, et d'autre part, une sécurité suffisante contre les agressions extérieures et la fraude, du fait des problèmes de délamination du film transparent et de la possibilité de re-laminer un autre film imprimé sur le coeur transparent, d'autres solutions alternatives ont été recherchées.

Ainsi, pour éviter ces problèmes d'opacité et d'adhérence, le document US8448872 décrit une carte à afficheur, telle qu'illustrée sur la Figure 2. Cette carte est réalisée par enrobage du substrat flexible 12 supportant le circuit imprimé et les composants électroniques dont l'afficheur 14, dans une résine 11 transparente solidifiée à basse température pour former le coeur transparent 10. Puis une couche de matériau plastique 24, 25 opaque est laminée sur chaque face de ce coeur transparent 10. Plus particulièrement, la couche opaque 24 destinée à recouvrir la surface du coeur en regard de l'afficheur 34 comprend une zone 15, localisée au-dessus de l'afficheur 14, pourvue d'une fenêtre 26 en matériau plastique transparent. La personnalisation graphique de la carte est alors réalisée par impression d'une couche d'encre 16, 17 directement sur la couche opaque 24, 25, à l'exception de la fenêtre transparente 26. La couche de personnalisation graphique est recouverte d'un film adhésif 27, 28 qui pénètre à travers l'encre de la personnalisation graphique lors du laminage d'un film 21, 22 transparent externe, de manière à permettre une bonne fixation du film 21, 22 sur la couche opaque 24, 26.

Cependant, une telle couche plastique 24, 25, 26 opaque rajoute une épaisseur supplémentaire à la carte qui comporte déjà des composants électroniques volumineux et ce, d'autant plus qu'une telle couche est disposée sur les deux faces du coeur transparent 10, afin d'obtenir une apparence visuelle de la personnalisation graphique satisfaisante sur les deux faces de la carte.

La demande de brevet DE 10 2009 009263 A1 décrit un procédé de fabrication d'une carte à afficheur comprenant les étapes de fourniture d'un coeur en plastique contenant une fenêtre, puis d'impression d'une couche de couleur opaque (30) sur le coeur à l'exception de la fenêtre, d'application d'une couche transparente (28) sur la couche opaque, et d'application d'une couche de personnalisation graphique sur la couche transparente.

L'invention a donc pour but de remédier à au moins un des inconvénients de l'art antérieur. En particulier, l'invention vise à proposer une carte à afficheur respectant les contraintes d'épaisseur, présentant une apparence visuelle satisfaisante et ne présentant pas de problème de délaminage. L'invention vise également à proposer une solution alternative pour fabriquer une telle carte à afficheur qui soit rapide, simple et peu coûteuse.

A cet effet, l'invention a pour objet une carte à puce à afficheur selon la revendication 1.

Ainsi, la couche d'encre est imprimée directement sur le coeur transparent si bien que le film transparent de protection n'est pas détérioré au moment de l'impression et du séchage de l'encre notamment. La cohésion entre les différentes couches de la carte permet une très bonne adhésion de l'ensemble, le film transparent adhère sur l'encre utilisée qui elle-même adhère sur le coeur transparent. Une telle carte présente une apparence visuelle de bonne qualité sans défaut dans le film transparent de protection et sans problème de délaminage.

Selon d'autres caractéristiques optionnelles de la carte :
- ladite au moins une couche est formée d'une première couche d'encre opaque imprimée sur la surface du coeur transparent, à l'exception d'une zone située en regard dudit afficheur, et d'une deuxième couche d'encre formant un motif de personnalisation graphique imprimée sur ladite première couche d'encre,
- la carte comprend en outre une couche de vernis transparent imprimée sur ladite zone dudit coeur transparent située en regard dudit afficheur,
- l'épaisseur de la couche de vernis est égale à l'épaisseur de ladite au moins une couche d'encre,
- elle comprend en outre, entre le coeur transparent et ladite au moins une couche imprimée et/ou la couche de vernis transparent, une couche d'un adhésif transparent thermo-activable,
- la couche d'adhésif transparent thermo-activable est un polyuréthane thermoplastique,
- le matériau de constitution du coeur transparent est une résine solidifiée thermo-ré-activable,
- la résine thermo-ré-activable est une résine de type époxy ou de type copolymère de polyuréthane,
- les encres et/ou vernis de constitution de la (ou des) couches imprimée(s) sont polymérisables aux UV, sous diodes à rayonnement UV,
- l'encre de constitution des régions opaques et/ou de la première couche opaque comprend un pigment opacifiant à base de dioxyde de titane.

L'invention en outre a pour objet un procédé de fabrication selon la revendication 9.

Selon d'autres caractéristiques optionnelles du procédé :
- l'étape consistant à imprimer ladite au moins une couche est réalisée par impression de deux couches distinctes, une première couche, imprimée sur la surface du coeur transparent à l'exception d'une zone située en regard dudit afficheur, formant une couche d'encre opaque, et une deuxième couche d'encre, imprimée sur ladite première couche d'encre opaque, formant un motif de personnalisation graphique,
- le procédé comprend en outre l'étape consistant à imprimer sur ladite zone du coeur transparent, située en regard dudit afficheur, une couche de vernis transparent,
- les étapes d'impression sont réalisées par jet d'encre,
- les étapes d'impression des différentes couches d'encre et/ou de vernis transparent peuvent être réalisées indépendamment ou avec le même équipement d'impression par jet d'encre,
- les étapes d'impression des première et deuxième couches d'encre sont réalisées avec le même équipement d'impression par jet d'encre,
- les étapes d'impression de la première couche d'encre et de la couche de vernis transparent sont réalisées simultanément avec le même équipement d'impression par jet d'encre,
- les étapes d'impression de la deuxième couche d'encre et de la couche de vernis transparent sont réalisées simultanément avec le même équipement d'impression par jet d'encre,
- les étapes d'impression des première et deuxième couches d'encre et de la couche de vernis transparent sont réalisées simultanément avec le même équipement d'impression par jet d'encre,
- selon une variante de l'invention, préalablement à la première étape d'impression est déposée une couche d'un adhésif thermoactivable,
- l'étape de laminage du film transparent est réalisée à une température inférieure à 100°C, de préférence inférieure à 95°C, pendant une durée inférieure à 10 minutes, de préférence inférieure à 5 minutes.

Le fait d'imprimer la (ou les) couche(s) d'encre par jet d'encre permet de ne pas détériorer la résine de constitution du coeur transparent et permet d'imprimer une quantité d'encre suffisante pour l'obtention d'une opacité satisfaisante. Lors de l'étape de laminage, le film adhésif thermoactivable ou la résine thermoréactivable de constitution du coeur, permet l'obtention d'une bonne adhésion de la (ou des) couche(s) d'encre sur le coeur transparent ainsi que sur le film transparent de protection.

D'autres particularités et avantages de l'invention apparaitront à la lecture de la description suivante faite à titre d'exemple illustratif et non limitatif, en référence aux Figures annexées qui représentent :
- La Figure 1, déjà décrite, un schéma en coupe d'une carte à afficheur selon un premier art antérieur,
- La Figure 2, déjà décrite, un schéma en coupe d'une carte à afficheur selon un deuxième art antérieur,
- La Figure 3, un schéma en coupe d'une carte à afficheur selon un premier mode de réalisation de l'invention,
- La Figure 4, un schéma en coupe d'une carte à afficheur selon un autre mode de réalisation de l'invention,
- La Figure 5, un schéma en coupe d'une carte à afficheur selon encore un autre mode de réalisation.

Dans la suite de la description, on entend par « couche d'encre », une couche homogène de gouttes d'encre superposées et/ou juxtaposées.

On entend par module électronique, un module équipé d'une puce de circuit intégré électriquement reliée à une interface de communication avec et/ou sans contact.

On entend par module multi-composant, un module composé d'un substrat flexible supportant un circuit imprimé sur lequel sont connectés électriquement un module électronique et d'autres composants électroniques, parmi lesquels un afficheur.

L'invention s'applique à tout type de carte à afficheur fonctionnant avec et/ou sans contact. L'interface de communication du module électronique de la carte comprend des plages de contacts externes au format ISO7816, c'est à dire destinées à affleurer la surface de la carte, et/ou une antenne noyée dans le corps de carte apte à communiquer sans contact selon la norme ISO14443. Le module électronique fait partie d'un module multi-composant. Le module multi-composant comprend notamment un substrat flexible supportant un circuit imprimé, l'afficheur ainsi que d'autres composants tels qu'une batterie, un microcontrôleur apte à accéder à des informations contenues dans la puce et à les afficher sur l'afficheur, et éventuellement un ou plusieurs boutons poussoirs pour communiquer avec le porteur de carte.

Les mêmes références sont utilisées, sur les Figures 3 à 5, pour désigner les mêmes éléments.

La Figure 3 représente un schéma d'une telle carte à afficheur vue en coupe. La carte se compose de plusieurs couches superposées sur un coeur central 30. Le coeur, référencé 30 sur la Figure 3, comprend le module multi-composant formé d'un substrat flexible référencé 32, supportant un circuit imprimé (non représenté) et différents composants électroniques 33 dont l'afficheur référencé 34. Ce module multi-composant 32, 33, 34 est enrobé dans un coeur transparent formé par une résine 31 transparente solidifiée à température ambiante. Le module multi-composant est donc noyé dans la résine 31.

Le matériau de constitution de la résine 31 peut par exemple être une résine transparente, de type polyuréthane PU, polymérisant à température ambiante.

De manière facultative, le module multi-composant peut par exemple être disposé dans une couche de matériau plastique, de type PVC (polychlorure de vinyle) jouant le rôle d'entretoise et permettant de maintenir le module multicomposant et de fixer sa position dans le coeur de résine 31 pendant l'enrobage.

Dans une étape ultérieure, une couche d'adhésif transparent thermo-activable est déposée sur chacune des surfaces externes du coeur transparent. Cet adhésif est plus particulièrement choisi parmi les polyuréthannes thermoplastiques, encore connu sous l'acronyme anglais TPU (pour « Thermoplastic Polyurethan »). Cet adhésif adhère bien à la résine de constitution du coeur transparent. Sa température de mise en oeuvre est de préférence de l'ordre de 90°C pour permettre une bonne adhésion avec la (ou les) les couche(s) d'encre imprimée(s) sur sa surface, au moment du laminage ultérieur d'un film transparent de protection. Chacune des couches d'adhésif transparent thermo-activable est référencée 35 et 36 sur les Figures 3 et 4.

Chaque couche d'adhésif 35, 36 est ensuite revêtue d'au moins une couche d'encre 50, 51. Cette couche 50, 51 présente avantageusement au moins une région opaque 53 située en regard du (ou des) composant(s) électronique(s) 33 du module multicomposant 32, à l'exception d'une zone 45 située en regard de l'afficheur 34. Cette couche 50, 51 forme en outre un motif de personnalisation complémentaire, qui peut être opaque ou non selon l'effet visuel recherché, dans au moins une autre région 52 ne comportant aucun composant électronique en regard.. Plus particulièrement, la zone 45 de la surface du coeur 30, située en regard de l'afficheur 34 n'est pas revêtue de cette couche d'encre, laissant apparaitre une ouverture au-dessus de l'afficheur 34.

Dans un mode de réalisation préféré, tel qu'illustré sur la Figure 4, la couche d'encre est formée d'une première couche d'encre (37, 38) opaque, à l'exception d'une zone (45) située en regard dudit afficheur (34), et d'une deuxième couche d'encre (39, 41) formant un motif de personnalisation graphique imprimée sur ladite première couche d'encre (37, 38). La deuxième couche d'encre formant le motif de personnalisation graphique peut être mono ou polychrome.

Dans ce cas, la couche d'encre opaque (37, 38) est de préférence, mais non exclusivement, de couleur blanche. Cette couleur blanche peut avantageusement être obtenue au moyen d'un pigment opacifiant à base de TiO₂ (dioxyde de Titane).

L'encre utilisée pour former la ou les couches d'encre imprimées, est de préférence une encre polymérisable aux UV. De manière avantageuse, l'encre utilisée est polymérisable sous diodes à rayonnement UV, encore notée Led-UV. Ces diodes présentent l'avantage de ne consommer que très peu d'énergie et de ne pas surchauffer le support sur lequel l'encre est appliquée. Ainsi, l'adhésif transparent thermoactivable TPU 35, 36 n'est pas activé par un quelconque apport de chaleur si bien qu'il est possible d'imprimer directement sur cet adhésif. Après séchage aux UV, la ou les couche(s) d'encre présente(nt) une épaisseur minimum de 10µm.

Un vernis transparent 40 est d'autre part appliqué par impression dans l'ouverture ménagée au-dessus de la zone 45 en regard de l'afficheur 34. De préférence, ce vernis est également un vernis polymérisable aux UV à froid, c'est-à-dire sous Led-UV.

Le fait d'utiliser des encres et vernis polymérisables aux UV sous Led-UV permet l'obtention d'un séchage rapide à froid. De plus, l'opacité de l'encre utilisée pour former les régions 53 opaques ou la couche opaque 37, 38 est bien meilleure qu'avec des encres classiques à solvant car, dans le cas des encres UV, le solvant ne s'évapore pas au moment du séchage. Il n'y a donc pas de perte de matière et l'épaisseur de la couche obtenue après séchage est égale à l'épaisseur d'encre appliquée, c'est-à-dire au moins 10µm.

De manière avantageuse, les encres et vernis sont appliqués par impression par jet d'encre. Cette technique est particulièrement avantageuse car elle permet d'imprimer, en une seule couche, une quantité d'encre UV suffisante pour obtenir une opacité des régions opaques 53 ou de la première couche 37, 38 qui soit satisfaisante. De plus, la technique d'impression par jet d'encre ne nécessite que peu de chaleur si bien qu'elle ne risque pas de détériorer la résine 31 de constitution du coeur transparent 30, ni la couche d'adhésif 35, 36.

De manière avantageuse, lorsque la couche d'encre imprimée à la surface du coeur transparent 30 est formée de plusieurs couches, les étapes d'impression des différentes couches peuvent être réalisées indépendamment ou simultanément, avec le même équipement d'impression par jet d'encre. Ainsi, la première couche d'encre 37, 38 et la deuxième couche 39, 41 d'encre, ou la première couche d'encre 37 et la couche de vernis transparent 40, ou la deuxième couche 39 d'encre et la couche de vernis transparent 40, ou enfin toutes les couches d'encre 37, 39 ; 38,41 et de vernis transparent 40 peuvent être réalisées simultanément ou quasi simultanément avec le même équipement d'impression par jet d'encre.

Un équipement tel que celui décrit dans le brevet US 7286 257 permet d'imprimer des couches différentes ci-dessus en une ou plusieurs passe(s) par une gestion de plusieurs têtes d'impression dédiées à un matériau d'impression différent. Par exemple, une couche opaque 24 et transparente 40 dans une fenêtre de la couche opaque et ayant les mêmes épaisseurs peuvent être réalisée simultanément au cours d'un passage ou plusieurs passages du coeur plastique devant des têtes d'impression de jet de matière ou d'encre.

Les différentes couches peuvent être déposées sélectivement sur au moins une partie du coeur plastique ou des parties complémentaires. La couche opaque peut être déposée uniquement en regard de composants électroniques ou tout élément (ou partie) destiné à être masqué.

Une dernière étape consiste ensuite à laminer un film transparent de protection 42, 43 à la surface de la couche 50, 51, ou de la deuxième couche 39, 41, et du vernis transparent 40. Un tel film transparent présente en général une épaisseur de l'ordre de 150µm. Il est de préférence enduit d'un adhésif de type polyuréthane PU ou polyuréthane thermoplastique TPU. Il permet de protéger la surface de la carte et le motif de personnalisation contre les agressions extérieures et les fraudes.

De manière avantageuse, la couche d'adhésif thermoactivable 35, 36 en polyuréthane thermoplastique TPU et l'adhésif d'enduction du film transparent de protection, en polyuréthane PU ou TPU, permettent un laminage du film transparent de protection à une température plus basse que la température classiquement utilisée, comprise généralement entre 130 et 150°C, pour laminer des films sur des cartes à puce.

Ainsi, le laminage est effectué à une température inférieure à 100°C, de préférence inférieure à 95°C, et de manière encore plus préférée inférieure à 92°C, pendant une durée inférieure à 10 min et de préférence inférieure à 5 min. Un tel laminage à faible température permet de ne pas détériorer les matériaux de constitution du film transparent et du coeur, de ne pas déformer l'afficheur 34, et de laisser les matériaux adhésifs de la couche d'adhésif TPU 35, 36 et du film transparent 42, 43 de protection emprisonner les couches d'encre 50, 51 ou 37, 38, 39, 41 et la couche de vernis 40 pour permettre une bonne adhérence de l'ensemble des couches les unes avec les autres.

L'épaisseur de la couche de vernis transparent 40, qui est appliquée sur la zone 45 en regard de l'afficheur 34, est avantageusement égale à l'épaisseur de la couche 50 d'encre imprimée à la surface du coeur transparent, ou à la somme des épaisseurs des première et deuxième couches d'encres 37 et 39 lorsque la couche imprimée est formée de deux couches distinctes, afin de conserver une planéité sur toute la surface de la carte en comblant l'ouverture laissée par les deux couches d'encres. Un autre avantage de cette couche de vernis transparent 40 est qu'elle permet en outre de protéger l'afficheur 34 pendant l'étape de laminage.

Dans une variante de réalisation, il est possible d'utiliser des encres UV contenant de l'eau. Dans ce cas, au moment du séchage par les Led-UV, l'eau contenue dans l'encre s'évapore, si bien que l'épaisseur de la couche d'encre restant après séchage est inférieure à l'épaisseur de la couche d'encre appliquée, mais supérieure à l'épaisseur obtenue après séchage à chaud d'une couche d'encre à solvant classique. Dans ce cas, l'épaisseur de la couche 50 ou la somme des épaisseurs des couches 37, 39 opaque et de personnalisation graphique est suffisamment fine, par exemple inférieure à 8µm, si bien qu'il n'est plus nécessaire de compenser l'épaisseur dans la zone 45 en regard de l'afficheur, par une couche de vernis transparent. Dans ce cas en effet, le film transparent de protection 42 et son adhésif d'enduction en PU ou TPU, permettent à eux seuls de compenser cette différence d'épaisseur.

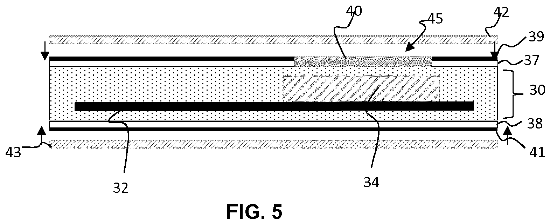

La Figure 5 représente un schéma d'une autre carte à afficheur vue en coupe, réalisée selon un autre mode de réalisation. Les mêmes références que sur la Figure 4 sont utilisées pour désigner les mêmes éléments. La différence essentielle entre ce mode de réalisation et celui de la Figure 4 réside dans le fait qu'elle ne comprend pas de couche d'adhésif TPU entre le coeur 30 et la première couche d'encre 37, 38 et entre le coeur 30 et la couche de vernis 40. Dans ce cas, le matériau de résine 31 choisi pour noyer le module multi-composant est thermo-ré-activable. Une telle résine peut par exemple être une résine de type époxy ou de type copolymère de polyuréthane qui se réactive également à une température assez faible et permet un laminage à une température inférieure à 95°C. Ainsi, lors de l'étape de laminage du film transparent de protection 42, 43 sur le coeur 30 portant les couches d'encre 37, 38, 39, 41 et la couche de vernis 40, la résine 31 de constitution du coeur se fluidifie en surface de sorte qu'elle adhère aux couches d'encre et de vernis de la même manière que la couche d'adhésif TPU des deux premiers modes de réalisation. Les couches d'encre et de vernis adhèrent donc très bien d'une part sur le coeur transparent et d'autre part sur l'adhésif d'enduction du film transparent de protection, assurant ainsi une très bonne cohésion de l'ensemble.

Les différents modes de réalisation permettent donc l'obtention d'une carte respectant les contraintes d'épaisseur fixées par la norme ISO7816, présentant une apparence visuelle de bonne qualité, sans défaut dans le film transparent de protection, et sans problème de délaminage.

## Revendications

1. Carte à puce à afficheur comprenant, noyé dans un coeur transparent (30), un module multi-composant (32, 34) supportant ledit afficheur (34), ladite carte étant **caractérisée en ce qu'**elle comprend :
- au moins une couche (37, 38, 39, 41, 50, 51) d'encre qui comporte un motif de personnalisation et qui a été imprimée sur la surface du coeur transparent (30) ou qui a été imprimée sur une couche d'adhésif transparente thermo-activable (35,36) déposeé sur la surface du coeur transparent (30) à l'exception d'une zone (45) située en regard dudit afficheur (34), ladite au moins une couche d'encre étant opaque sur au moins une région (53),
- un film transparent (42,43) recouvrant ladite au moins une couche (37, 38, 39, 41, 50, 51) d'encre.

2. Carte selon la revendication 1, **caractérisée en ce que** ladite au moins une couche est formée d'une première couche d'encre (37, 38) opaque imprimée sur la surface du coeur transparent (30), à l'exception d'une zone (45) située en regard dudit afficheur (34), et d'une deuxième couche d'encre (39, 41) formant un motif de personnalisation graphique imprimée sur ladite première couche d'encre (37, 38).

3. Carte selon l'une des revendications 1 à 2, **caractérisée en ce qu'**elle comprend en outre une couche (40) de vernis transparent imprimée sur ladite zone (45) dudit coeur transparent située en regard dudit afficheur (34).

4. Carte selon l'une des revendications 1 à 3, **caractérisée en ce qu'**elle comprend en outre, entre le coeur transparent (30) et ladite au moins une couche (50, 51 ; 37, 38) imprimée et/ou la couche (40) de vernis transparent, ladite couche d'un adhésif transparent thermo-activable (35, 36).

5. Carte selon la revendication 4, **caractérisé en ce que** la couche d'adhésif transparent thermo-activable est un polyuréthane thermoplastique.

6. Carte selon l'une des revendications 1 à 3, **caractérisé en ce que** le matériau (31) de constitution du coeur transparent (30) est une résine solidifiée thermo-ré-activable.

7. Carte selon la revendication 6, **caractérisée en ce que** la résine thermo-ré-activable est une résine de type époxy ou de type copolymère de polyuréthane.

8. Carte selon l'une des revendications 1 à 7, **caractérisée en ce que** les encres et/ou vernis de constitution de la (ou des) couche(s) imprimée(s) sont polymérisables aux UV, sous diodes à rayonnement UV.

9. Procédé de fabrication d'une carte à puce à afficheur comprenant un module multi-composant (32, 34) supportant ledit afficheur (34), ledit procédé consistant dans un premier temps à enrober le module multi-composant dans un coeur transparent (30) et comprenant en outre les étapes suivantes :
- imprimer sur la surface du coeur transparent (30) ou sur une couche d'adhésif thermo-activable déposée sur la surface dudit coeur (30), à l'exception d'une zone (45) située en regard dudit afficheur (34), au moins une couche d'encre dont au moins une région est opaque (53) et qui comprend un motif de personnalisation,
- laminer un film transparent (42, 43) sur ladite au moins une couche d'encre (50, 51).

10. Procédé selon la revendication 9, **caractérisé en ce que** l'étape consistant à imprimer ladite au moins une couche est réalisée par impression de deux couches distinctes, une première couche (37, 38), imprimée sur la surface du coeur transparent à l'exception d'une zone (45) située en regard dudit afficheur (34), formant une couche d'encre opaque, et une deuxième couche d'encre (39, 41), imprimée sur ladite première couche d'encre opaque (37, 38), formant un motif de personnalisation graphique.

11. Procédé selon l'une des revendications 9 à 10, **caractérisé en ce qu'**il comprend en outre l'étape consistant à imprimer sur ladite zone (45) du coeur transparent (30), située en regard dudit afficheur (34), une couche de vernis transparent (40).

12. Procédé selon l'une des revendications 9 à 11, **caractérisé en ce que** les étapes d'impression sont réalisées par jet d'encre.

13. Procédé selon l'une des revendications 10 à 12, **caractérisé en ce que** les étapes d'impression des différentes couches d'encre (37, 38, 39, 41) et/ou de vernis transparent (40) peuvent être réalisées indépendamment ou simultanément, avec le même équipement d'impression par jet d'encre.

14. Procédé selon l'une des revendications 9 à 13, **caractérisé en ce que** préalablement à la première étape d'impression est déposée ladite couche d'un adhésif thermo-activable (35, 36).

15. Procédé selon l'une des revendications 9 à 14, **caractérisé en ce que** l'étape de laminage du film transparent (42, 43) est réalisée à une température inférieure à 100°C, de préférence inférieure à 95°C, pendant une durée inférieure à 10 minutes, de préférence inférieure à 5 minutes.

## Patentansprüche

1. Chipkarte mit Anzeigeelement mit einem in einen transparenten Kern (30) eingebetteten Mehrkomponentenmodul (32, 34), das die Anzeige (34) trägt. Die Chipkarte weist folgendes auf:
- Mindestens eine Schicht Tinte (37, 38, 39, 41, 50, 51), die ein Personalisierungsmotiv aufweist und die auf die Oberfläche des transparenten Kerns (30) gedruckt wurde, oder die auf eine Schicht einer wärmeaktivierbaren transparenten Klebeschicht (35, 36) gedruckt wurde, die auf der Oberfläche des transparenten Kerns (30) aufgebracht ist, mit Ausnahme eines Bereichs (45), der sich gegenüber der benannten Anzeige (34) befindet, wobei die mindestens eine Tintenschicht auf mindestens einem Bereich (53) undurchsichtig ist,
- einen transparenten Film (42, 43), der mindestens eine der Tintenschichten (37, 38, 39, 41, 50, 51) bedeckt.

2. Karte nach Anspruch 1, **dadurch gekennzeichnet, dass** auf dieser mindestens eine Schicht aus einer ersten undurchsichtigen Tintenschicht (37, 38) gebildet wird, die auf die Oberfläche des transparenten Kerns (30) gedruckt ist, mit Ausnahme eines Bereichs (45) gegenüber der benannten Anzeige (34), und einer zweiten Tintenschicht (39, 41), die ein grafisches Personalisierungsmotiv bildet, das auf die erste Tintenschicht (37, 38) gedruckt ist.

3. Karte nach einem der Ansprüche 1 bis 2, **dadurch gekennzeichnet, dass** zu ihr außerdem eine Schicht (40) aus transparentem Lack gehört, die auf den Bereich (45) des transparenten Kerns gedruckt ist, die sich gegenüber der Anzeige (34) befindet.

4. Karte nach einem der Ansprüche 1 bis 3, **dadurch gekennzeichnet, dass** zu ihr außerdem zwischen ihr und dem transparenten Kern (30) mindestens eine bedruckte Schicht (50, 51; 37, 38) gehört, und/oder die transparente Lackschicht (40), eine Schicht aus einer wärmeaktivierbaren transparenten Klebeschicht (35, 36).

5. Karte nach Anspruch 4, **dadurch gekennzeichnet, dass** die wärmeaktivierbare transparente Klebeschicht ein thermoplastisches Polyurethan ist.

6. Karte nach einem der Ansprüche 1 bis 3, **dadurch gekennzeichnet, dass** das Material (31), aus dem der transparente Kern (30) besteht, ein mit Wärme reaktivierbares verfestigtes Harz ist.

7. Karte nach Anspruch 6, **dadurch gekennzeichnet, dass** das mit Wärme reaktivierbare Harz ein Harz vom Typ Epoxy oder vom Typ Polyurethan-Copolymer ist.

8. Karte nach einem der Ansprüche 1 bis 7, **dadurch gekennzeichnet, dass** die Farben und/oder Beschichtungen, aus denen die gedruckte(n) Schicht(en) bestehen, unter UV-Strahlungsdioden UV-härtbar sind.

9. Verfahren zur Herstellung einer Chipkarte mit Anzeigeelement bestehend aus einem Mehrkomponentenmodul (32, 34), das die Anzeige (34) trägt, wobei das Verfahren zunächst das Einbetten des Mehrkomponentenmoduls in einen transparenten Kern (30) und ferner die folgenden Schritte umfasst:
- Aufdruck mindestens einer Tintenschicht, von der mindestens ein Bereich undurchsichtig ist (53), und die ein Personalisierungsmotiv aufweist, auf die Oberfläche des transparenten Kerns (30) oder auf einer auf der Oberfläche des Kerns (30) aufgebrachte wärmeaktivierbare Klebeschicht, mit Ausnahme eines der Anzeige (34) gegenüberliegenden Bereichs (45).
- Laminieren einer transparenten Folie (42, 43) auf mindestens eine Farbschicht (50, 51).

10. Verfahren nach Anspruch 9, **dadurch gekennzeichnet, dass** der Schritt des Druckens dieser mindestens einen Schicht durch Drucken von zwei verschiedenen Schichten ausgeführt wird, einer ersten Schicht (37, 38), die auf die Oberfläche des transparenten Kerns mit Ausnahme eines Bereichs (45) gedruckt wird, der der Anzeige (34) zugewandt ist und eine undurchsichtige Tintenschicht bildet, und einer zweiten Tintenschicht (39, 41), die auf die erste undurchsichtige Tintenschicht (37, 38) gedruckt wird und ein grafisches Personalisierungsmotiv bildet.

11. Verfahren nach einem der Ansprüche 9 bis 10, **dadurch gekennzeichnet, dass** es ferner den Schritt umfasst, der darin besteht, auf den Bereich (45) des transparenten Kerns (30), der sich gegenüber der Anzeige (34) befindet, eine Schicht aus transparentem Lack (40) zu drucken.

12. Verfahren nach einem der Ansprüche 9 bis 11, **dadurch gekennzeichnet, dass** die Druckschritte mittels Tintenstrahl durchgeführt werden.

13. Verfahren nach einem der Ansprüche 10 bis 12, **dadurch gekennzeichnet, dass** die Schritte des Bedruckens der einzelnen Farbschichten (37, 38, 39, 41) und/oder des Klarlacks (40) unabhängig voneinander oder gleichzeitig mit der gleichen Tintenstrahldruckeinrichtung durchgeführt werden können.

14. Verfahren nach einem der Ansprüche 9 bis 13, **dadurch gekennzeichnet, dass** vor dem ersten Druckschritt die Schicht aus einer wärmeaktivierbaren Klebeschicht (35, 36) aufgebracht wird.

15. Verfahren nach einem der Ansprüche 9 bis 14, **dadurch gekennzeichnet, dass** der Schritt des Laminierens der transparenten Folie (42, 43) bei einer Temperatur unter 100°C, vorzugsweise unter 95°C, für einen Zeitraum von weniger als 10 Minuten, vorzugsweise für weniger als 5 Minuten durchgeführt wird.

## Claims

1. A smart card with a display comprising, embedded in a transparent core (30), a multi-component module (32, 34) supporting said display (34), where said card is **characterised in that** it comprises:
- at least one coat (37, 38, 39, 41, 50, 51) of ink comprising a personalisation pattern, which has been printed on the surface of the transparent core (30) or which has been printed on a thermo-activated transparent adhesive coat (35, 36) applied on the surface of the transparent core (30) with the exception of an area (45) located opposite said display (34), where said at least one coat of ink is opaque in at least one region (53),
- transparent film (42, 43) covering said at least one coat (37, 38, 39, 41, 50, 51) of ink.

2. A card according to claim 1, **characterised in that** the said at least one coat is formed of a first coat of opaque ink (37, 38) printed on the surface of the transparent core (30), with the exception of an area (45) located opposite said display (34), and a second coat of ink (39, 41) forming a graphical personalisation pattern printed on said first coat of ink (37, 38).

3. A card according to any of claims 1 to 2, **characterised in that** it further comprises a coat (40) of transparent varnish printed on said area (45) of said transparent core located opposite said display (34).

4. A card according to any of claims 1 to 3, **characterised in that** it further comprises, between the transparent core (30) and said at least one printed coat (50, 51; 37, 38) and/or the coat (40) of transparent varnish, said coat of thermo-activated transparent adhesive (35, 36).

5. A card according to claim 4, **characterised in that** the coat of thermo-activated transparent adhesive is in thermoplastic polyurethane.

6. A card according to any of claims 1 to 3, **characterised in that** the material (31) making up the transparent core (30) is solidified thermo-reactivated resin.

7. A card according to claim 6, **characterised in that** the thermo-reactivated resin is a resin of the epoxy type or a polyurethane copolymer.

8. A card according to any of claims 1 to 7, **characterised in that** the inks and/or varnishes making up the printed coat or coats are UV-curable, using UV radiation diodes.

9. A method for manufacturing a smart card with a display comprising a multi-component module (32, 34) supporting said display (34), where said method first consists in coating the multi-component module in a transparent core (30) and further comprising the following steps:
- printing on the surface of the transparent core (30) or on a coat of thermo-activated adhesive applied on the surface of said core (30) with the exception of an area (45) located opposite said display (34), at least one coat of ink where at least one region is opaque (53) and which comprises a personalisation pattern,
- laminating transparent film (42, 43) on said at least one coat of ink (50, 51).

10. A method according to claim 9, **characterised in that** the step consisting in printing said at least one layer is carried out by printing two distinct coats, one first coat (37, 38), printed on the surface of the transparent core with the exception of an area (45) located opposite said display (34), forming a coat of opaque ink, and a second coat of ink (39, 41), printed on said first coat of opaque ink (37, 38), forming a graphical personalisation pattern.

11. A method according to any of claims 9 to 10, **characterised in that** it further comprises a step consisting in printed on said area (45) of the transparent core (30), located opposite said display (34) a coat of transparent varnish (40).

12. A method according to any of claims 9 or 11, **characterised in that** the printing steps are carried out using the ink jet process.

13. A method according to any of claims 10 to 12, **characterised in that** the steps for printing the different coats of ink (37, 38, 39, 41) and/or transparent varnish (40) can be carried out independently or simultaneously, with the same ink jet printing equipment.

14. A method according to any of claims 9 to 13, **characterised in that** prior to the first printing step, said coat of thermo-activated adhesive (35, 36) is applied.

15. A method according to any of claims 9 to 14, **characterised in that** the step for laminating transparent film (42, 43) is carried out at a temperature below 100 °C, preferably below 95 °C, for a time less than 10 minutes, preferably less than 5 minutes.
